# EUROPÄISCHE PATENTSCHRIFT

(11) **EP 0 395 856 B1**
(45) Veröffentlichungstag und Bekanntmachung des Hinweises auf die Patenterteilung: **11.08.1993**
(21) Anmeldenummer: 90104477.6
(22) Anmeldetag: 09.03.1990
(51) Int. Cl.: B01D 53/36, B01J 23/89

(54) **Verfahren zur Herstellung von Traegerkatalysatoren zur Oxidation von Kohlenmonoxid**
Process for producing supported catalysts for the carbon monoxide oxidation
Procédé de préparation de catalyseurs supporté pour l'oxydation de monoxyde de carbone

(30) Priorität: 29.04.1989 DE 3914294
(43) Veröffentlichungstag der Anmeldung: 07.11.1990
(73) Patentinhaber: SOLVAY CATALYSTS GmbH, D-30173 Hannover (DE)
(72) Erfinder: Falke, Holger, D-3005 Hemmingen 1 (DE); Strauss, Günther, D-3000 Hannover (DE)
(74) Vertreter: Lauer, Dieter, Dr.

(56) Entgegenhaltungen:
- EP-A- 0 147 839
- FR-A- 906 299
- FR-A- 2 530 160
- US-A- 4 698 324
- US-A- 4 839 327
- CHEMISTRY LETTERS, 1987, Seiten 405-408, The Chemical Society of Japan, Tokyo, JP; M. HARUTA et al.: "Novel gold catalysts for th oxidation of carbon monoxide at a temperature far below O degrees Celcius"

## Beschreibung

Die vorliegende Erfindung betrifft Verfahren zur Herstellung von ein Gemisch von Gold und Eisenoxid enthaltenden Trägerkatalysatoren zur Oxidation von Kohlenmonoxid unterhalb von etwa 50 °C,.

Kohlenmonoxid (CO) ist ein Gas, das bei vielen industriellen Prozessen, z.B. bei der Carbonylierung von Kohlenwasserstoffen zur Herstellung von Aldehyden, eingesetzt wird. Es entsteht ferner bei chemischen Prozessen, insbesondere als Produkt der unvollständigen Verbrennung, beispielsweise in Feuerungsanlagen oder Verbrennungsmotoren. Es kann ferner in der Raumluft von industriellen Anlagen oder in Anlagenteilen vorkommen, in welchen mit CO gearbeitet wird, ferner auch in Kohlebergwerken. Aufgrund der hohen Giftigkeit dieses farblosen, geruchlosen Gases ist es wünschenswert und bei entsprechend hoher Konzentration an CO auch notwendig, den Gehalt an CO in der Luft, insbesondere der Atemluft, möglichst zu reduzieren. Hierzu ist die katalysierte Oxidation, beispielsweise mit Luftsauerstoff, besonders gut geeignet, Seit langem sind daher umfangreiche Anstrengungen zur Entwicklung von Katalysatoren unternommen worden, die bei der Oxidation von CO verwendbar sind.

So wurden Katalysatoren zur Oxidation von CO entwickelt, die ihre katalytische Aktivität allerdings erst hei hohen Temperaturen, beispielsweise bei oder oberhalb von 300 °C entfalten und deshalb besonders gut zur Anwendung für CO-haltige heiße Verbrennungsgase geeignet sind. Die Entfaltung der katalytischen Aktivität erst bei derartig hohen Temperaturen ist bei dieser Art der Anwendung kein Nachteil, da Verbrennungsgase im allgemeinen bei derartig hohen Temperaturen anfallen. Auch eine mögliche Kontamination der Katalysatoren durch kondensierenden Wasserdampf besteht naturgemäß nicht. Für die CO-Oxidation bei Temperaturen unterhalb 50 °C sind derartige Katalysatoren jedoch nicht verwendbar.

Für Katalysatoren, die die Oxidation von CO bei Temperaturen unterhalb etwa 50 °C katalysieren sollen, beispielsweise in (üblicherweise wasserdampfhaltiger) Luft, und die ihre Verwendung beispielsweise in Rettungsgeräten für Bergleute o.ä. finden sollen, ist es von entscheidender Wichtigkeit, daß sie einerseits im Bereich von etwa -10 °C bis etwa 50 °C katalytisch aktiv sein müssen. Vorteilhafterweise rollten sie auch in Anwesenheit von Feuchtigkeit noch wirksam sein. Weitere wünschenswerte Eigenschaften sind die möglichst ökonomische Ausnutzung der im allgemeinen sehr teuren katalytisch wirksamen Bestandteile, beispielsweise Edelmetalle, sowie eine gute Handhabbarkeit.

Es sind zwar Katalysatoren bekannt, die die Oxidation von CO bereits bei Temperaturen unterhalb 50 °C katalysieren können. Besonders hervorgehoben werden muß Hopcalit, ein Gemisch aus Mangandioxid, Kupferoxid, sowie gewünschtenfalls weiteren Metalloxiden, z.B. Kobaltoxid und Silberoxid. Hopcalit besitzt jedoch den entscheidenden Nachteil, daß es durch Wasserdampf, der in Luft stets vorhanden ist, sehr schnell desaktiviert ist. Um Hopcalit für die Oxidation von CO in feuchter Luft, beispielsweise in Rettungsgeräten, verwenden zu können, ist die Kombination mit einem Trocknungsmittel notwendig, das aber naturgemäß ebenfalls nur begrenzte Kapazität bei der Wasserabtrennung besitzt.

Außer Hopcalit, das ganz oder überwiegend aus katalytisch aktiven Nichtedelmetallen besteht, sind auch Edelmetalle auf ihre katalytische Aktivität hinsichtlich der Oxidation von Kohlenoxid in feuchter Luft bei Umgebungstemperatur untersucht worden.

Die Autoren M. Haruta, T. Kobayashi, H. Sano und N. Yamada geben in einer Veröffentlichung in Chemistry Letters 1987, Seiten 405 bis 408 katalytisch wirksame Vollkatalysatoren aus Gold und einem Übergangsmetalloxid, insbesondere α-Fe₂O₃, an, welche für die katalytische Oxidation von CO auch bei Umgebungstemperatur in feuchter Luft verwendbar sind. Die bevorzugten Katalysatoren bestehen aus 5 Atom-% Gold und und 95 Atom-% Eisen in Form von α-Fe₂O₃, das heißt, aus etwa 11,5 Gew.-% Gold und 88,5 Gew.-% α-Fe₂O₃. Um wirksam zu sein, müssen diese Katalysatoren nicht nur diese spezielle Zusammensetzung aufweisen. Sie müssen auch auf spezielle Weise, nämlich durch gemeinsames Fällen der Bestandteile hergestellt worden sein. Trägerkatalysatoren erwiesen sich als unwirksam bei der CO-Oxidation bei Temperaturen unterhalb von etwa 50 °C. Daraus mußte der Fachmann den Schluß ziehen, daß Trägerkatalysatoren für diesen Verwendungszweck nicht geeignet sind.

Die US-PS 4,698,324 beschreibt ein Verfahren zur Herstellung von goldhaltigen Trägerkatalysatoren, wobei als Trägermaterial Silicium-, Aluminium-, Magnesiumverbindungen oder Schaummetalle eingesetzt werden. Die Immobilisierung von ausschließlich Gold auf Metalloxide zur Herstellung von katalytisch wirksamen Materialien ist ebenfalls bekannt (US-PS 4,839,327). Eine Anwendung dieser Katalysatoren zur Oxidation von CO bei Umgebungstemperatur in feuchter Luft wird nicht beschrieben.

Aufgabe der Erfindung ist ein Verfahren zur Herstellung von ein Gemisch von Gold und Eisenoxid enthaltenden Trägerkatalysatoren, die für die Oxidation von CO bei Temperaturen unterhalb von 50 °C verwendbar sind und eine ökonomische Ausnutzung des Goldes gestatten zu entwickeln.

Die Aufgabe wird durch das erfindungsgemäße Verfahren gelöst.

Das erfindungsgemäße Verfahren zur Herstellung von Trägerkatalysatoren zur Oxidation von CO bei Temperaturen unterhalb von 50 °C ist dadurch gekennzeichnet, daß man ein Fe₂O₃ enthaltendes, poröses keramisches Trägermaterial
a) mit einer Lösung einer Goldverbindung tränkt oder mit der Suspension einer Goldverbindung beschichtet und zusätzlich mit einer Eisenverbindung tränkt oder mit der Suspension einer Einsenverbindung beschichtet und anschließend gewünschtenfalls trocknet und
b) das eine Goldverbindung enthaltende Trägermaterial bei einer Temperatur von mindestens 200 °C calciniert,

mit der Maßgabe, daß man das Gold in einer Menge auf das Material aufbringt, daß der Gehalt an Gold, bezogen auf das Gesamtgewicht des fertigen Trägerkatalysators, zwischen 0,01 Gew.-% und 15 Gew.-%, vorzugsweise zwischen 0,05 und 4 Gew.-% insbesondere zwischen 0,1 und 1 Gew.-% beträgt.

Unter "porösem" keramischen Material wird im Rahmen der vorliegenden Erfindung solches Material verstanden, das eine spezifische Oberfläche von etwa 10 bis etwa 300 m²/g besitzt.

Als poröses keramisches, Fe₂O₃ enthaltendes Trägermaterial verwendet man beispielsweise solche Materialien, in denen Fe₂O₃ im Gemisch mit anderen, als keramisches Trägermaterial bekannten Materialien, insbesondere Oxiden 3- oder 4-wertiger Metalle vorliegt. Hierzu zählen beispielsweise Aluminiumoxide, insbesondere γ-Aluminiumoxid, Siliziumdioxid und Alumosilikate. Trägermaterialien mit einem Gehalt an Fe₂O₃ und anderen Metalloxiden lassen sich durch übliche zur Herstellung derartiger Mischoxid-Träger an sich bekannte Verfahren leicht herstellen.

Eine Möglichkeit zur Herstellung der Fe₂O₃ enthaltenden Trägermaterialien besteht beispielsweise darin, einen käuflichen, Fe₂O₃ -freien Träger, z.B. γ-Aluminiumoxid, SiO₂ oder Alumosilikat, mit der Lösung eine Eisensalzes, z.B. einer wäßrigen Lösung von Eisenchlorid oder vorzugsweise Eisennitrat, zu tränken und den Träger bei Temperaturen oberhalb 250 °C zu glühen, vorzugsweise bei Temperaturen zwischen 300 und etwa 500 °C.

Bevorzugt verwendet man im Rahmen der vorliegenden Erfindung Trägermaterial, das abgesehen von herstellungsbedingten, unvermeidbaren Verunreinigungen, aus Fe₂O₃ besteht.

Die Form, in welcher das Fe₂O₃ enthaltende oder aus Fe₂O₃ bestehende Trägermaterial vorliegt, ist für die Anwendung im Rahmen der vorliegenden Erfindung im wesentlichen nicht kritisch. Es können die dem Fachmann bekannten Trägerformen verwendet werden, beispielsweise Perlen, geschnittene oder gebrochene Strangpreßlinge. Zu beachten ist jedoch, daß Trägermaterialien, deren Teilchengröße kleiner als etwa 0,5 mm ist, schlecht handhabbar sind. Zweckmäßig verwendet man Partikel, deren Größe zwischen etwa 0,5 und etwa 10 mm, vorzugsweise zwischen 1 und 7 mm liegt. Geeignet sind auch Monolithträger, z.B. Wabenkörper mit üblichen Kanaldurchmessern, beispielsweise 0,5 bis 5 mm.

Das Fe₂O₃ enthaltende oder aus Fe₂O₃ bestehende poröse keramische Trägermaterial tränkt man gemäß Stufe a) mit einer Lösung einer Goldverbindung oder beschichtet es mit der Suspension einer Goldverbindung. Hierbei ist es bevorzugt, das Trägermaterial mit einer Lösung einer Goldverbindung zu tränken.

Als Lösung einer Goldverbindung können Lösungen von Goldverbindungen in organischen Lösemitteln, z.B. Ethern, wie Diethylether oder Alkoholen z.B. Ethylalkohol, ggf. im Gemisch mit Wasser, verwendet werden, Vorzugsweise verwendet man rein wässrige Lösungen von Goldverbindungen.

Als Goldverbindung können beispielsweise Salze verwendet werden, die Goldkationen enthalten, beispielsweise Goldhalogenide, insbesondere Goldtrichlorid. Verwendet werden können auch Salze mit komplexierten Goldkationen, wobei als Komplexbildner beispielsweise Ammoniak oder mit Niedrigalkylgruppen substituierte primäre, sekundäre oder tertiäre Amine in Frage kommen. Beispielsweise ist Gold(Diethylamin)-Trichlorid verwendbar.

Es können beispielsweise auch solche Goldverbindungen verwendet werden, die das Gold in Form komplexer Anionen enthalten. Verwendbar sind beispielsweise die gewünschtenfalls hydratisierten Goldsäuren, wie Halogenogoldsäuren, insbesondere Tetrachlorogoldsäure, ferner Cyanogoldsäure oder Nitratogoldsäure sowie die entsprechenden Alkalisalze, z.B. das Kaliumsalz.

Im Verfahren der vorliegenden Erfindung verwendet man als Goldverbindung bevorzugt Tetrachlorogoldsäure-Tetrahydrat.

Die Konzentration der Lösung der Goldverbindung, insbesondere der wässrigen Lösung, ist nicht kritisch. Sie beträgt vorteilhafterweise zwischen etwa 10 g/l und 100 g/l Lösungsmittel.

In einer Variante beschichtet man das Trägermaterial mit der Suspension einer Goldverbindung. Hierzu kann man hochfein vermahlene Goldverbindungen aufschlämmen, beispielsweise in Wasser. Besonders geeignet sind nichtgealterte, d.h. frisch bereitete Suspensionen einer Goldverbindung. Gut geeignet sind Suspensionen von basischen Goldverbindungen wie Goldhydroxid. Diese Suspensionen kann man erzeugen, indem man eine Lösung einer Goldverbindung herstellt - als Goldverbindungen und Lösungsmittel kommen die vorstehend beschriebenen in Betracht - und mit einer Base kontaktiert. Als Base kommen beispielsweise basische Alkali- oder Ammoniumverbindungen, z.B. NH₃-Wasser, Natron-oder Kalilauge, Natrium-, Kalium- oder Ammoniumcarbonat oder -hydrogencarbonat, in Frage. Besonders geeignet sind Ammoniumverbindungen, insbesondere Ammoniumcarbonat. Die Base verwendet man vorteilhafterweise in Form einer Lösung, insbesondere in Form einer wässrigen Lösung. Die Konzentration ist nicht kritisch und liegt vorteilhafterweise zwischen 10 g/l und 100 g/l.

Gemäß dem erfindungsgemäßen Verfahren tränkt man in Stufe a) das Trägermaterial zusätzlich mit einer Lösung einer Eisenverbindung oder beschichtet es mit einer Suspension einer Eisenverbindung. Das Tränken mit einer Lösung einer Eisenverbindung ist bevorzugt.

Als Lösung einer Eisenverbindung verwendet man vorteilhaft Lösungen von Eisen(III) -Salzen. Man kann Eisensalze mit den Anionen organischer Säuren, z.B. Ameisensäure, bevorzugt aber Salze mit den Anionen anorganischer Säuren einsetzen. Besonders geeignet sind Eisenhalogenide und -pseudohalogenide, insbesondere Eisenchlorid. Hervorragend geeignet ist Eisennitrat. Als Lösungsmittel können organische Lösungsmittel, z.B. Ether wie Diethylether verwendet werden. Es können auch Alkohole, z.B. Ethylalkohol, ggf. im Gemisch mit Wasser, verwendet werden. Als bevorzugtes Lösungsmittel wird Wasser verwendet. Die Konzentration des Eisensalzes beträgt vorteilhafterweise zwischen etwa 10 und 100 g/l Lösungsmittel.

Sofern man das Trägermaterial in einer Variante mit der Suspension einer Eisenverbindung beschichtet, kann man Aufschlämmungen von fein pulverisierten Eisenverbindungen einsetzen. Bevorzugt werden nicht gealterte Suspensionen verwendet. Gut geeignet sind Suspensionen von basischen Eisen(III) -verbindungen, beispielsweise Eisenoxidhydrat, Eisenhydroxid. Diese Suspensionen können durch Kontaktieren von Eisensalzlösungen, z.B. Eisennitrat, mit Basen, insbesondere den vorstehend beschriebenen Basen wie Ammoniumcarbonat, erhalten werden.

Die Lösungen von Goldverbindung und Eisenverbindung bzw. die entsprechende Suspension können nacheinander, vorzugsweise in der Reihenfolge Eisenverbindung-Goldverbindung, oder gleichzeitig auf das Trägermaterial aufgebracht werden. Man kann auch eine der beiden Metallverbindungen als Lösung und die andere als Suspension aufbringen.

Vorteilhafterweise bringt man die beiden Komponenten gleichzeitig auf den Träger auf. Hierzu kann man beispielsweise das Trägermaterial mit einer durch gemeinsame Fällung erhaltenen Suspension einer Gold- und einer Eisenverbindung beschichten. Besonders bevorzugt ist es im erfindungsgemäßen Verfahren, ein Gemisch einer Goldverbindung mit einer Eisenverbindung auf dem Trägermaterial aufzubringen, wobei man das Material mit einer Lösung tränkt, die sowohl eine Eisenverbindung als auch eine Goldverbindung enthält.

Das Aufbringen der vorstehend beschriebenen Salzlösungen bzw. Suspensionen auf das Trägermaterial kann nach Methoden erfolgen, wie sie bei der Herstellung von Trägerkatalysatoren üblicherweise angewendet werden. Beispielsweise taucht man das Trägermaterial in die Salzlösung bzw. Suspension ein und tränkt bzw. beschichtet das Trägermaterial auf diese Weise. Vorzugsweise besprüht man das Trägermaterial mit den Salzlösungen oder Suspensionen.

Gewünschtenfalls kann das in Stufe a) gebildete eine Goldverbindung enthaltende Trägermaterial getrocknet werden, beispielsweise bei Temperaturen zwischen 50 und 150 °C.

Das vorstehend beschriebene Aufbringen von Gold- und Eisenverbindungen in Form von Lösungen oder Suspensionen kann, gegebenenfalls nach Trocknen, wiederholt werden, um sicherzustellen, daß im fertigen Trägerkatalysator das Gold in einer Menge von 0,01 bis 15 Gew.-%, vorzugsweise von 0,05 bis 4 Gew.-%, besonders bevorzugt zwischen 0,1 bis 1 Gew.% enthalten ist. Ob und ggf. wie oft das Aufbringen wiederholt werden muß, kann der Fachmann durch eine Analyse des fertigen Trägerkatalysators leicht ermitteln.

Nach dem Tränken oder Beschichten mit der oder den Salzlösungen bzw. Suspensionen kann, gewünschtenfalls nach einer wie vorstehend beschriebenen Trocknung, das Trägermaterial mit einer Base kontaktiert werden. Als Base kommen z.B. NH₃-Wasser, Alkalilaugen, Alkali- oder Ammoniumhydrogencarbonat oder -carbonat in Frage. Sie liegen vorzugsweise in Form einer wässrigen Lösung vor. Besonders geeignet ist eine wässrige Lösung von Ammoniumcarbonat mit einer Konzentration von 10 g/l bis 100 g/l.

Es hat sich herausgestellt, daß dann, wenn mit einer Goldverbindung getränktes oder, nach einer bevorzugten Ausführungsform, mit einer Goldverbindung und mit einer Eisenverbindung getränkten Trägermaterial vorliegt, das Kontaktieren des getränkten Trägermaterials mit einer Base besonders vorteilhafte Ergebnisse liefert.

Eine ganz besonders bevorzugte Ausführungsform des erfindungsgemäßen Verfahren sieht vor, ein aus Fe₂O₃ bestehendes Trägermaterial zu verwenden, ein Gemisch einer Goldverbindung und einer Eisenverbindung auf dem Trägermaterial aufzubringen, indem man das Trägermaterial mit einer, eine Goldverbindung und eine Eisenverbindung enthaltenden Lösung tränkt, das getränkte Trägermaterial zu trocknen und mit einer Base zu kontaktieren und bei mindestens 200 °C zu calcinieren.

Ausgezeichnete Trägerkatalysatoren werden erhalten, wenn Gold- und Eisenverbindungen in solchen Mengen auf den Träger gebracht werden, welche einem Atomverhältnis von Gold zu Eisen von 1 : 999 bis 1 : 4, vorzugsweise von 1 : 99 bis 1 : 9 entsprechen.

Die Temperatur, bei welcher man die Fällung der Suspension oder die Nachbehandlung der getränkten Trägerkatalysatorvorstufe durchführt, liegt zwischen 0 °C und 90 °C, vorzugsweise zwischen 20 °C und 80 °C, und besonders bevorzugt zwischen 20 °C und 60 °C.

Das nach einem der vorstehend beschriebenen Verfahren erhältliche, gewünschtenfalls getrocknete, Goldverbindungen enthaltende Trägermaterial wird nun zur Umwandlung in die erfindungsgemäßen Trägerkatalysatoren bei Temperaturen von mindestens 200 °C calciniert. Dies kann in einer Atmosphäre aus inerten Gasen wie Stickstoff geschehen, Vorteilhaft erfolgt das Calcinieren in Luft. Das calcinieren erfolgt über eine Zeitdauer von bis zu mehreren Stunden, beispielsweise über eine Dauer von 1 bis 24 Stunden. Erst durch dieses Calcinieren wird das Gold-und Eisenverbindungen enthaltende Trägermaterial aktiviert und ist dann für die CO-Oxidation bei Temperaturen unterhalb von etwa 50 °C verwendbar. Die Calcinierungstemperatur liegt vorzugsweise zwischen 300 °C und 500 °C.

Überraschenderweise erwiesen sich die erfindungsgemäß hergestellten Trägerkatalysatoren als verwendbar für die CO-Oxidation bei Temperaturen unterhalb von etwa 50 °C. Sie sind katalytisch aktiv auch bei der Anwesenheit von Feuchtigkeit (Wasserdampf). Das CO kann in verhältnismäßig geringer Konzentration, beispielsweise in einer Konzentration von etwa 5 ppm bis etwa 100 ppm, aber auch in höheren Konzentrationen, bis hin zu 10 Vol-% und mehr, in Gasgemischen enthalten sein. Die erfindungsgemäß hergestellten Trägerkatalysatoren sind daher besonders gut geeignet zur CO-Oxidation in ggf. Feuchtigkeit enthaltender Luft bei Temperaturen unterhalb etwa 50 °C. Ihren Anwendungsbereich finden sie beispielsweise in der Klimatechnik, besonders für Fahrerkabinen und Fahrgasträume von Bussen und Autos und in sogenannten Selbstrettern, wie sie beispielsweise in Bergwerken und bei Rettungsdiensten (Feuerwehr) verwendet werden.

Vorteil des erfindungsgemäßen Verfahrens ist die besonders ökonomische Ausnutzung des verwendeten Edelmetalls Gold, sowie die einfache Art der Herstellung.

Die folgenden Beispiele sollen die Erfindung weiter erläutern, ohne sie in ihrem Umfang einzuschränken.

### Beispiel 1:

Herstellung eines, ein Gemisch von Gold und Eisenoxid enthaltenden Trägerkatalysators unter Verwendung eines Fe₂O₃-enthaltenden Trägermaterials

### 1.1: Herstellung des Trägermaterials:

Zur Herstellung eines Fe₂O₃-enthaltenden porösen keramischen Trägermaterials wurde ein γ-Al₂O₃-Träger in Strangpreßling-Form, mit einem Durchmesser von 2 mm, und einer spezifischen Oberfläche von 120 m²/g verwendet, welcher durch Extrudieren von γ-Al₂O₃-Pulver, mit Wasser vermischt, Trocknen und Brechen des Extrudates erhalten wurde. Die gebrochenen Preßlinge besaßen eine Länge von etwa 2 bis 6 mm.

Etwa 38,5 g dieses Trägermaterials wurden in eine wässrige Lösung getaucht, zu deren Herstellung destilliertes Wasser verwendet wurde und die Eisennitrat in einer Konzentration von 50 g/l enthielt. Das Trägermaterial wurde etwa 2 Stunden in dieser wässrigen Lösung belassen. Das getränkte Material wurde anschließend aus der Lösung abgesiebt, bei 120 °C getrocknet und 2 Stunden bei 400 °C geglüht. Erhalten wurden 40 g eines Fe₂O₃ enthaltenden γ-Al₂O₃-Trägers.

### 1.2: Herstellen des Trägerkatalysators (ohne Nachbehandeln mit einer Base)

Etwa 40 g des im Beispiel 1.1 hergestellten, Fe₂O₃ enthaltenden Trägermaterials wurden mit einer wässrigen Lösung, welche 30 g/l Tetrachlorogoldsäure-Tetrahydrat und etwa 390 g/l Eisennitrat-Nonahydrat enthielt, imprägniert. Das Trägermaterial wurde dann bei 120 °C getrocknet. Es enthielt ein auf dem Trägermaterial aufgebrachtes Gemisch von Goldsalz und Eisensalz.

Das erhaltene getränkte Trägermaterial wurde 5 h bei 400 °C in Luftatmosphäre durch Calcinieren aktiviert. Der auf diese Weise erhaltene fertige Trägerkatalysator enthielt Gold in einer Menge von 0,25 Gew.-%.

### Beispiel 2:

Herstellung eines Gold und Eisenoxid enthaltenden Trägerkatalysators unter Verwendung von Fe₂O₃-enthaltenden porösen keramischen Trägermaterial und Nachbehandeln mit einer Base.

40 g eines gemäß Beispiel 1.1 hergestellten Trägermaterials wurden mit einer wässrigen Lösung, welche 30 g/l Tetrachlorogoldsäure-Tetrahydrat und 390 g/l Eisennitrat-Nonahydrat enthielt, imprägniert. Das Trägermaterial wurde dann bei 120 °C getrocknet. Anschließend wurde das Material in eine wässrige Lösung von Ammoniumcarbonat (Konzentration: 290 g/l) gegeben und nach 5 Minuten abgesiebt und getrocknet.

Das erhaltene getränkte und nachbehandelte Trägermaterial wurde 5 h bei 400 °C in Luftatmosphäre durch Calcinieren aktiviert. Der Goldgehalt des auf diese Weise erhaltenen Trägerkatalysators betrug etwa 0,25 Gew.-%.

### Beispiel 3.:

Herstellung eines Gold und Eisenoxid enthaltenden Trägerkatalysators unter Verwendung von aus Fe₂O₃ bestehendem porösem keramischen Material (Hämatit)
45 g eines aus Hämatit (α-Fe₂O₃) bestehenden Trägermaterials in Grießform, Partikeldurchmesser: 0,5 bis 3 mm (Handelsprodukt der Firma Giulini, Ludwigshafen), wurden mit einer wässrigen Lösung imprägniert, welche 30 g/l Tetrachlorogoldsäure-Tetrahydrat und 390 g/l Eisennitrat-Nonahydrat enthielt. Der imprägnierte Träger wurde bei 120 °C getrocknet und in eine wässrige Lösung von Ammoniumcarbonat (Konzentration etwa 290 g/l) getaucht. Nach 5 Minuten wurde das Material aus der Lösung abgesiebt, bei 120 °C getrocknet und 5 h bei 400 °C durch Calcinieren in Luftatmosphäre aktiviert. Der Goldgehalt des auf diese Weise erhaltenen Trägerkatalysators betrug etwa 0,22 Gew.-%.

### Beispiel 4:

Anwendung der in den Beispielen 1 bis 3 hergestellten Trägerkatalysatoren zur CO-Oxidation

### Beispiel 4.1.:

Als Reaktor wurde ein Rohrreaktor mit Innendurchmesser von etwa 2 cm verwendet. In diesen Reaktor wurden 10 g des nach Beispiel 1 erhaltenen Trägerkatalysators eingegeben. Über die auf diese Weise erhaltene Katalysatorschüttung wurde Luft mit einer relativen Luftfeuchtigkeit von 90 % und einem CO-Gehalt von etwa 50 ppm geleitet. Die Temperatur von Katalysatorschüttung, Rohrreaktor und Gas lag bei Umgebungstemperatur, d.h. 22 °C. Die zu reinigende Luft wurde in einem Volumenstrom von 5 l/h über den Katalysator geleitet. Nach dem Passieren der Katalysatorschüttung betrug die Konzentration an CO in der Luft nur noch etwa 19 ppm, d.h. nur noch 38 % des Ausgangswertes.

### Beispiel 4.2.

Es wurden 10 g des in Beispiel 2 hergestellten Trägerkatalysators in dem oben beschriebenen Rohrreaktor verwendet. Die Durchführung dieses Versuches erfolgte unter an sonst gleichen Bedingungen wie in Beispiel 4.1. Diesmal wurde eine Abreicherung des CO auf etwa 50 % des ursprünglichen Wertes beobachtet.

### Beispiel 4.3.

Diesmal wurden 12 g des in Beispiel 3 hergestellten Trägerkatalysators verwendet. Die Durchführung erfolgte unter gleichen Bedingungen wie im Beispiel 4.1. Nach dem Passieren der Katalysatorschüttung war der CO-Gehalt der Luft auf nur noch etwa 30 % des Ausgangswertes abgesenkt.

## Patentansprüche

1. Verfahren zur Herstellung von Trägerkatalysatoren zur Oxidation von CO bei Temperaturen unterhalb von 50 °C, dadurch gekennzeichnet, daß man ein Fe₂O₃ enthaltendes, poröses keramisches Trägermaterial
a) mit einer Lösung einer Goldverbindung tränkt oder mit der Suspension einer Goldverbindung beschichtet und zusätzlich mit einer Lösung einer Eisenverbindung tränkt oder mit der Suspension einer Einsenverbindung beschichtet und anschließend gewünschtenfalls trocknet und
b) das eine Goldverbindung enthaltende Trägermaterial bei einer Temperatur von mindestens 200 °C calciniert,
mit der Maßgabe, daß man die Goldverbindung in einer solchen Menge auf das Material aufbringt, daß der Gehalt an Gold, bezogen auf das Gesamtgewicht des fertigen Trägerkatalysators, zwischen 0,01 Gew.-% und 15 Gew.-%, vorzugsweise zwischen 0,05 und 4, insbesondere zwischen 0,1 und 1 Gew.-% beträgt.

2. Verfahren nach Anspruch 1, dadurch gekennzeichnet, daß man als Träger ein poröses Material verwendet, welches aus Fe₂O₃ besteht.

3. Verfahren nach Anspruch 1, dadurch gekennzeichnet, daß man das Trägermaterial mit einer Lösung einer Goldverbindung und einer Lösung einer Eisenverbindung, vorzugsweise mit einer, sowohl eine Goldverbindung als auch eine Eisenverbindung enthaltenden Lösung tränkt.

4. Verfahren nach einem der vorhergehenden Ansprüche, dadurch gekennzeichnet, daß man als Goldverbindung anorganische Goldsalze, vorzugsweise Goldkationen enthaltende Halogenide insbesondere Goldtrichlorid, oder solche Goldverbindungen verwendet, die das Gold in Form komplexer Anionen enthalten, vorzugsweise Halogenogoldsäuren oder die entsprechenden Alkalisalze, insbesondere Tetrachlorogoldsäure-Tetrahydrat.

5. Verfahren nach einem der vorhergehenden Ansprüche, dadurch gekennzeichnet, daß man als Eisenverbindung anorganische Eisensalze, insbesondere Eisennitrat, verwendet.

6. Verfahren nach einem der vorhergehenden Ansprüche, dadurch gekennzeichnet, daß man in Stufe a) das mit der Goldverbindung getränkte Material, gewünschtenfalls nach Trocknung, mit einer Base kontaktiert.

7. Verfahren nach Anspruch 6, dadurch gekennzeichnet, daß man als Base basische Alkali- oder Ammoniumverbindungen, vorzugsweise Ammoniumverbindungen, insbesondere bevorzugt Ammoniumcarbonat verwendet.

8. Verfahren nach Anspruch 6 oder 7, dadurch gekennzeichnet, daß man das Kontaktieren mit der Base bei Temperaturen von 20 bis 80 °C durchführt.

9. Verfahren nach Anspruch 1, dadurch gekennzeichnet, daß solche Mengen an Gold- und Eisenverbindungen eingesetzt werden, welche einem Atomverhältnis von Gold zu Eisen von 1 : 999 bis 1 : 4, vorzugsweise von 1 : 99 bis 1 : 9 entsprechen.

10. Verfahren nach Anspruch 1, dadurch gekennzeichnet, daß man bei einer Temperatur von 200 °C bis 500 °C calciniert.

## Claims

1. Process for the production of carrier catalysts for the oxidation of CO at temperatures below 50°C, characterised in that a porous ceramic carrier material containing Fe₂O₃
a) is impregnated with a solution of a gold compound or is coated with the suspension of a gold compound and is additionally impregnated with a solution of an iron compound or is coated with the suspension of an iron compound and is then dried if desired and
b) the carrier material containing a gold compound is calcined at a temperature of at least 200°C,
with the proviso that the gold compound is applied to the material in such a quantity that the content of gold, relative to the total weight of the finished carrier catalyst, is between 0.01% by weight and 15% by weight, preferably between 0.05 and 4, in particular between 0.1 and 1% by weight.

2. Process according to Claim 1, characterised in that a porous material which consists of Fe₂O₃ is used as a carrier.

3. Process according to Claim 1, characterised in that the carrier material is impregnated with a solution of a gold compound and a solution of an iron compound, preferably with a solution containing both a gold compound and an iron compound.

4. Process according to one of the preceding Claims, characterised in that inorganic gold salts, preferably halides containing gold cations, in particular gold trichloride, or those gold compounds which contain the gold in the form of complex anions, preferably halauric acids or the corresponding alkali salts, in particular chlorauric acid tetrahydrate, are used as the gold compound.

5. Process according to one of the preceding Claims, characterised in that inorganic iron salts, in particular iron nitrate, are used as the iron compound.

6. Process according to one of the preceding Claims, characterised in that in stage a) the material impregnated with the gold compound is contacted with a base, if desired after drying.

7. Process according to Claim 6, characterised in that basic alkali or ammonium compounds, preferably ammonium compounds, particularly preferably ammonium carbonate, are used as the base.

8. Process according to Claim 6 or 7, characterised in that the contacting with the base is carried out at temperatures of about 20 to about 80°C.

9. Process according to Claim 1, characterised in that those quantities of gold and iron compounds which correspond to an atomic ratio of gold to iron of 1 : 999 to 1 : 4, preferably from 1 : 99 to 1 : 9, are used.

10. Process according to Claim 1, characterised in that calcination is carried out at a temperature of 200°C to 500°C.

## Revendications

1. Procédé de préparation de catalyseurs supportés pour l'oxydation de CO à des températures inférieures à 50 °C ,caractérisé en ce qu'on soumet une matière céramique poreuse de support , contenant Fe₂O₃ :
(a) à imprégnation avec une solution d'un composé d'or ou à revêtement par une suspension d'un composé d'or et,en outre, à imprégnation par une solution d'un composé du fer ou à revêtement par une suspension d'un composé du fer et éventuellement ensuite à du séchage , et
(b) à calcination , à une température d'au moins 200 °C, de la matière de support contenant un composé de l'or , à la condition d'appliquer sur la matière le composé de l'or en une quantité telle que la teneur en or, par rapport au poids total du catalyseur supporté terminé, se situe entre 0,01 % en poids et 15 % en poids , avantageusement entre 0,05 et 4 et en particulier entre 0,1 et 1 % en poids .

2. Procédé selon la revendication 1 , caractérisé en ce qu'on utilise comme support une matière poreuse,qui consiste en Fe₂O₃.

3. Procédé selon la revendication 1 , caractérisé en ce qu'on imprègne la matière de support arec une solution d'un composé de l'or et une solution d'un composé du fer , avantageusement avec une solution contenant aussi bien un composé de l'or qu'un composé du fer.

4. Procédé selon l'une des revendications précédentes,caractérisé en ce qu'on utilise comme composé de l'or des sels minéraux de l'or,de préférence des halogénures contenant des cations or, en particulier du trichlorure d'or,ou des composés de l'or qui contiennent l'or sous forme d'anions complexes , avantageusement des acides halogénés de l'or ou les sels alcalins correspondants , en particulier de l'acide tétrachloroaurique tétrahydraté.

5. Procédé selon l'une des revendications précédentes,caractérisé en ce qu'on utilise comme composé du fer des sels minéraux de fer , notamment le nitrate de fer.

6. Procédé selon l'une des revendications précédentes,caractérisé en ce l'on met ,dans l'étape (a),la matière imprégnée du composé de l'or,en contact,éventuellement après séchage,avec une base .

7. Procédé selon la revendication 6 , caractérisé en ce qu'on utilise comme base des composés basiques alcalins ou d'ammonium , avantageusement des composés d'ammonium , de façon particulièrement préférée le carbonate d'ammonium .

8. Procédé selon la revendication 6 ou 7 , caractérisé en ce qu'on effectue la mise en contact avec la base à des températures de 20 à 80 °C .

9. Procédé selon la revendication 1 , en ce qu'on utilise des quantités de composés de l'or et du fer correspondant à un rapport entre les atomes d'or et de fer de 1:999 à 1:4 ,avantageusement de 1:99 à 1:9 .

10. Procédé selon la revendication 1 , caractérisé en ce qu'on effectue la calcination à une température de 200 °C à 500 °C .
